# EUROPEAN PATENT SPECIFICATION

(11) **EP 4 433 194 B1**
(45) Date of publication and mention of the grant of the patent: **29.07.2026**
(21) Application number: 22818252.3
(22) Date of filing: 14.11.2022
(51) Int. Cl.: B01D 46/00, B01D 46/10, B01D 46/52

(54) **HOLDING DEVICE FOR A FILTER ELEMENT**
HALTEVORRICHTUNG FÜR EIN FILTERELEMENT
DISPOSITIF DE MAINTIEN POUR UN ELEMENT FILTRANT

(30) Priority: 15.11.2021 CH 0705572021
(43) Date of publication of application: 25.09.2024
(73) Proprietor: Zehnder Group International AG, 5722 Gränichen (CH)
(72) Inventor: JANSEN, Jan, 5104 AV Dongen (NL)
(74) Representative: Rentsch Partner AG
(86) International application number: PCT/EP2022/081837
(87) International publication number: WO 2023/084093

(56) References cited:
- CN-A- 113 318 529
- KR-B1- 102 284 703
- US-A- 2 405 293
- US-A- 3 789 589
- US-A- 4 363 643
- US-A- 5 501 794
- US-A1- 2003 070 406

## Description

### FIELD OF THE INVENTION

The present invention relates generally to a frame, in particularly to a reusable filter frame for disposable filters, and to a disposable filter usable for the reusable filter frame in air passageways of Heating-Ventilation and Air-Conditioning (HVAC) systems.

### BACKGROUND OF THE INVENTION

Many conventional Heating-Ventilation and Air-Conditioning (HVAC) systems include a disposable filter. Typically, these filters are mounted in and permanently attached to a filter frame for use in a HVAC system. After a certain service life, the filters have to be replaced due to dirt and clogging. In most cases, the filter including the frame is replaced and the used filter and filter frame are disposed of. For a proper system operation and to provide the necessary filtering capacity, a replacement may be necessary several times a year depending on the use and degree of fouling of the filter. All of these applications have the disadvantage that unnecessary waste and costs are generated since the filter including the frame is replaced and disposed of each time, even though only the filter is no longer functional. A filter known in the prior art is for example disclosed in US 5 501 794. US 2003/070406 A1, US 4 363 643 A, KR 102 284 703 B1 and CN 113 318 529 A are other relevant prior art documents.

### SUMMARY OF THE INVENTION

In the state of the art, filter assemblies containing a frame and a removable filter for HVAC systems are known. Typically, the reusable filter frames consist of a base and a cover between which the removable filter is installed. While offering the removing of the filter and therefore the reuse of the filter frame, these filter frames often implicate the risk, that the newly installed filter is inserted backward or incorrectly mounted to the filter frame. The consequence of an incorrect mounting is a dislocation of the filter on system startup or operation. Inadvertent dislodgement of the filter allows air to flow without filtering and may create mechanical problems to the HVAC system as well as health problems to the individuals affected. To prevent an incorrect mounting of a removable filter, these filter frames often include additional guide systems which have to engage with each pleat of the filter. However, a simple and quick replacement of the filter is not possible anymore.

Other known reusable filter frames use additional locking systems to prevent a dislodgement of the filter. These locking systems often require tools for the opening and closing the locking system.

It is an overall objective of the present invention to advance the state of the art regarding the reusable filter frames and filter elements. Favorably, one or more of the before-mentioned disadvantages of the prior art are overcome fully or partly.

As will become apparent in the following, the invention may in particular allow an easy and quick replacement of a removable filter in a reusable filter frame without the requirement of any tools and the securely remain of the filter in its designated seat in the filter frame.

In a general way, the overall objective is achieved by the subject of the independent claims. Particularly advantageous embodiments are defined by the dependent claims, as well as the overall disclosure.

In an aspect, the overall objective is achieved by a holding device for holding a filter element in accordance with the present disclosure. The filter element includes a plurality of pleats extending parallel to each other between opposite ends of the filter element and each pleat includes a fold line defining a pleat tip and a pair of adjacent panels. The pleat tips may be slightly rounded and the filter element forms either a rigid or a reversible collapsible and expandable zig-zag-pattern. The filter element particularly includes two respective peripheral end sections and each of them includes at least one panel and one pleat tip, but typically one single pleat, wherein the peripheral end sections form the respective end of the filter element. In some embodiments, the filter element may be a filter element as described herein, in particular a filter element with a predetermined folding edge. The holding device includes a filter frame. The filterframe has a first and a second side. Furthermore, the filter frame includes two elongated base elements and two elongated connection elements. The connection elements extend between the base elements and interconnect the base elements. The base elements and the connection elements circumferentially delimit, in combination with each other, a receiving aperture. The receiving aperture is through-going between the first side and the second side, that is, it typically protrudes from the first side to the second side. The base elements extend parallel to each other along a first direction. The base elements each comprise an elongated holding receptacle. The holding receptacles extend parallel to each other along the first direction and open into a front surface of the respective base element, i.e. at the first side of the holding device, that means when viewed onto the first side the opening of the holding receptacle, points in the same direction as the first side. The holding receptacles are each configured to receive a respective peripheral end section of the filter element.

Further, the holding device includes a clamping device. The clamping device is completely releasably attached to the filter frame and thereby removably clamps the filter element to the filter frame. In the attached, i.e. connected state, the clamping device and the filter frame contact each other. Upon disconnecting the clamping device from the filter frame, the clamping device and the filter frame are completely separated **from** each other.

The term "releasably connected" as used herein means that the connection can be released without destroying the connected components, respectively parts thereof. Furthermore, the two components are in the non-connected state completely separated from each other. For example, a material bonding, such as gluing or welding is not a releasable connection, because it cannot be released without destroying, respectively altering, the two connected components. Additionally, a releasable connection can undergo multiple connection/disconnection cycles. Typically, a releasable connection can be released without applying considerable forces.

The holding device is used in particular for HVAC systems. The gas flowing through the filter element is in particular air. If appropriate however, the holding device may also be designed to be used for holding any suitable filter elements designed to have any gas flowing through it.

Typically, the receiving aperture of the holding device has a height between 200 mm to 800 mm, particularly 400 mm to 600 mm, particularly 450 mm to 550 mm, and/or a width between 100 mm to 300 mm, in particular between 120 mm to 200 mm, in particular between 150 mm to 175 mm, and/or a depth, respectively thickness, between 5 mm to 50 mm, in particular between 5 mm to 30 mm, in particular between 10 mm to 20 mm, depending on the corresponding filter element and the use of the HVAC system.

The expressions "first side" and "second side" are used in reference to the holding device when the filter element is installed in the filter frame, wherein the first side is the side facing the filter element. It is understood that the first side and the second side are different from each other. Further, the expression "first direction" is used with reference to the holding device when the filter element is installed and the holding device is mounted in the HVAC system, wherein the first direction is transverse to the upper end of the filter frame and extends along the x-axis. The transverse direction is typically perpendicular to the longitudinal direction and the vertical direction. Typically, the extension of the holding device along the longitudinal direction is larger than along the transverse direction and in particular the extension of the holding device along the transverse direction is larger than along the vertical direction. Furthermore, the expression "height" refers to the length of the connection elements and extends along the y-axis, i.e. along the longitudinal direction, from the bottom to the upper end of the holding device in the assembled state and the expression "width" refers to the length of the base elements and extends along the x-axis, i.e. along the transversal direction. The expression "depth" refers to the thickness of the holding device and extends along the z-axis, i.e. along the vertical direction, from the first side in direction to the second side of the holding device.

The receiving aperture extends between the base elements and the connection elements and is configured to receive a filter element of a HVAC system through the first side of the filter frame. The receiving aperture substantially matches the shape and dimension of the respective filter element so that the air is not allowed to directly bypass the filter element.

The elongated holding receptacles are defined by an outer edge portion and an inner upright edge portion of the respective base element. Typically, the elongated holding receptacles are grooves with a base in direction of the second side of the holding device, but may also be formed as a through-going recess in the respective base element. Each elongated holding receptacle extends continuously parallel along the first direction over the entire width of the receiving aperture and opens into the front surface of the respective base element at the first side of the holding device. The front surface of the respective base element is arranged in the same direction as the first side of the holding device. Furthermore, the depth of the respective holding receptacle along the z-axis and therefore of the respective edge portions of the base element is typically designed to match with the thickness of the used filter element wherein the outer edge portion of the respective holding receptacle, which is further away from the receiving aperture, is flush with the used filter element. The distance between the inner and the outer edge portion forming the holding receptacle of the respective base element is designed to receive at least one panel and a pleat tip, but typically one single pleat, of the peripheral end section of the filter element.

When the respective peripheral end section is installed in the respective holding receptacle, the filter element extends over the entire receiving aperture of the holding device. If the filter element is an expandable zig-zag-pattern filter element, the filter pleats expand while installed in the holding device with a uniform spacing of the pleats over the entire receiving aperture.

In some embodiments, one of the base elements may contain an additional tag which indicates the upper end of the holding device and therefore the correct mounting direction of the filter arrangement into an HVAC system.

The filter support structure may be a planar bearing surface which is designed to support the filter element in the current or respectively flow direction of the air flow. Typically, each filter support structure is in flush with a back side of the respective connection element at the second side of the holding device, wherein the back side of the respective connection element is defined in the same direction as the second side of the holding device. Typically, the respective filter support structure of each connection element is arranged along the entire extension of the receiving aperture in the direction of the y-axis, i.e. along the longitudinal direction, as will be discussed in more detail further below.

Further, each of the connection elements comprises an inner and outer edge portion wherein the inner edge portion of each connection element facing the receiving aperture may provide a sealing surface for side edges of the filter element and therefore have at least the same depth, respectively thickness, as the associated filter element. Such an edge portion prevents air from bypassing the filter element and therefore ballooning the filter element out of the filter frame. Typically, the inner edge portion of each connection element facing the receiving aperture has a rectangular configuration and the same thickness as the associated filter element and is therefore in flush with the latter. In other embodiments, the inner edge portion of each connection element facing the receiving aperture may have a zig-zagged configuration that follows the contour of the filter pleats and therefore may provide a closer fit therewith. Alternatively, the edge portion of each connection element facing the receiving aperture may have any configuration as long as the function of the sealing surface and thus a bypassing of the airflow may be prevented.

The releasable clamping device is typically movable between an open position and a closed position. The open position allows the filter element to be installed in or removed from the filter frame. In the closed position, the clamping device is configured to attach the filter element to the filter frame and/or to retain the filter element in an expanded condition. In the open position, the clamping device may structurally be completely separated from the remaining parts of the holding device.

In some embodiments, the base elements and the connection elements are rectangularly interconnected. In such embodiments, the two base elements, respectively the two connection elements, each have the same length and the connection elements extend along the y-axis perpendicularly to the first direction between the two base elements and circumferentially delimit a rectangular receiving aperture. However, the respective base elements and/or connection elements may also have different lengths and may be connected in a trapezoidal, parallelogram or any other quadrangular shape suitable to receive a corresponding filter element.

In some embodiments, the connection elements each comprises a filter support structure. The filter support structure projects proximal from the respective connection element towards, respectively into, the receiving aperture.

In some embodiments, the filter support structure is in each case arranged along a complete or substantially complete extension of the receiving aperture between the base elements. Typically, the filter support structure of each connection element is a one-piece filter support structure with a respective width between 1 **mm** and 30 **mm,** in particular of 5 **mm** and 10 **mm,** and a depth between 0.5 **mm** and 5 **mm** in particular of 1 **mm** and 3 **mm** and extends along the y-axis, i.e. along the longitudinal direction, of the entire receiving aperture. Alternatively, the filter support structure of each connection element may also consist of a number of planar segments which are arranged along the y-axis of the entire receiving aperture. In these alternative embodiments, the planar segments typically have the same size and are arranged equally distributed from each other along the y-axis of the entire receiving aperture. However, the planar segments may also be different in size and randomly arranged along the y-axis of the entire receiving aperture.

In some embodiments, the holding device includes additionally at least one filter support rib. The filter support ribs are planar bearing structures and provide additional support for the filter element. The filter support ribs may be arranged in flush with the filter support structure of the connection elements and/or in flush with the back side of the base elements. In some embodiments, the filter support ribs may extend along the x- and/or y-axis of the entire height and/or width of the receiving aperture and interconnect the respective filter support structures of the connection elements and/or the respective base elements. The filter support ribs prevent the pleats from bowing or collapsing when the filter arrangement discussed further below is placed in an air stream of a HVAC-system. Typically, the filter support ribs may in some embodiments have a height respectively width between 1 mm and 10 mm, in particular of 3 mm and 7 mm, and depth between 0.5 mm and 5 mm in particular of 1 mm and 3 mm.

In some embodiments, the holding device may include a longitudinal filter support rib and/or a transversal filter support rib. The longitudinal filter support rib is connected with and extends between the base elements along the y-axis, i.e. along the longitudinal direction, through the receiving aperture while the transversal filter support rib is connected with and extends between the filter support structures of the respective connection element along the x-axis, i.e. along the transversal direction, through the receiving aperture. Typically, the longitudinal and the transversal filter support ribs are arranged centrally and perpendicularly to the respective base element or filter support structure of the connection element and therefore divide the receiving aperture into four rectangular and equally sized sections.

Alternatively, in some embodiments, the holding device may include a plurality of longitudinal and/or a plurality of transversal filter support ribs. In these alternative embodiments, the longitudinal and transversal filter support ribs are typically arranged equally spaced and perpendicular to the respective base element or filter support structure of the connection element and extend along the x- and y-axis through the entire receiving aperture. Therefore, the longitudinal and transversal filter support ribs may form a unitary grid structure. In some further embodiments, the holding device may include one or more longitudinal and/or transversal filter support ribs which may be arranged in a non-perpendicular and/or non-unitary distributed structure.

In some embodiments, one transversal filter support rib is triangularly-shaped and follow generally the contour of the predetermined folding edge of the filter element as described further below, thereby providing an additional support to the filter element, while using in a HVAC system. Typically, the transversal triangularly-shaped filter support rib is arranged centrally and perpendicularly to the respective filter support structure of the connection elements. Alternatively, the shape of one transversal filter support rib may be rectangular - shaped or roundly-shaped and may be arranged perpendicularly at any position between the filter support structures of the connection elements. The shaped transversal filter support rib follows preferably the contour of the predetermined folding edge of the filter element, i.e. it corresponds to the predetermined folding edge, and is arranged at the position between the filter support structures of the connection elements where the filter element has the predetermined folding edge as a counter contour.

In some embodiments, each of the connection elements includes a mounting structure. The mounting structure projects from the respective connection element in an outwards direction. The mounting structure is configured to engage with a corresponding counter mounting structure of a HVAC system. The expression "outwards direction" means that the mounting structure projects distally away from the respective connection respectively away from the receiving aperture. Each of the mounting structure of the connection element is configured to be arranged with the mounting structure of the HVAC system such that air bypassing the filter element unfiltered is prevented. Typically, each mounting structure is a guide rail which extends along the y-axis, i.e. along the longitudinal direction of the holding device, of the entire height of the respective connection element for facilitating installation and removal of the filter arrangement to the corresponding counter mounting structure of an HVAC system. Alternatively, other mounting structures may be used, such as clamps or screws, which are suitable to engage the holding device or the filter arrangement respectively with the mounting structure of the HVAC system in such a way to prevent air bypass the filter element unfiltered.

Typically, the filter frame, each filter support structure, the filter support ribs, and the mounting structure are formed integrally and are made from an injection molded polymer. Such a design is favorable regarding manufacture and manufacturing costs. Alternatively, the filter frame, respectively the base elements and connection elements, the filter support structures, and the filter support ribs may also be made from any other suitable material and may be realized as separate or partly separate parts that are mounted to each other.

According to the invention, the clamping device includes, or consists of, at least one detachable locking clip associated with each of the base elements, in particular, the detachable locking clips are releasably connected to each of the base elements. The detachable locking clips each comprise a projection to engage with the filter element between two neighboring panels at the peripheral end section of the filter element. The clamping device, and in particular the detachable locking clip, is made for example from a synthetic polymer, but may also be made from any other suitable material such as metal. The term "locking clip" as used herein describes a clip that engages between two neighboring panels by means of a form lock and a force lock and particularly snap-fits over the respective base element and its holding receptacle and thus holding the filter element in place in the filter frame or in its holding receptacle respectively. Preferably, the clamping means is configured to be releasably attached to the filter frame by a snap-fit connection. For example, the clamping means may be configured to be releasably attached to the filter frame by a force-locking and/or form locking connection.

According to the invention, the projection of the clamping device extends along the longitudinal direction of the holding device, i.e. the y-direction, beyond the holding receptacle and its inner upright edge portion, and thus holds in a mounted state the peripheral end section of a filter element in the holding receptacle. Further, in some embodiments the projection of the clamping device protrudes along the vertical direction, i.e. the z-axis, over the inner upright edge portion of the respective base element or is in flush with the inner upright edge portion of the respective base element.

In some embodiments, the locking clip is configured such that it can at least partially encompass the base element, e.g. one of the base elements, in particular such it can encompass the base element on at least one or on both sides along the z-direction.

The clamping device comprises two separate detachable locking clips associated with each of the base elements. In its mounted and closed state, each of the locking clip snap-fits over the receiving aperture, which defines the width of the respective base element. If one of the base elements contains an additional tag as described further above, one of the two locking clips may contain a recess, to engage around the additional tag and snap-fit over the receiving aperture which defines the width of the respective base element. Typically, the detachable locking clips are designed without hinges, but alternatively, each of the detachable locking clip may contain a hinge to facilitate attachment and removal. A detachable locking clip without hinges has the advantage that the longevity of the filter frame and the associated locking clip is increased, since living hinges and hinges in general can only withstand limited loads.

In some embodiments, the clamping device may comprise more than one detachable locking clip associated with each of the base elements. In its closed state, the detachable locking clips each snap-fit over the respective base element and are optionally equally spaced apart from each other.

In specific embodiments, the detachable locking clips may be connected to each other by an elongated connecting rib. The connecting rib extends over the entire height of the receiving aperture along the direction of the longitudinal rib arranged in the filter frame. For facilitating attachment and removal of the detachable locking clips, in these embodiments the connecting rib may is bendable and/or the locking clips contain hinges.

Typically, each detachable locking clip contains one projection which engages between two neighboring panels at the peripheral end section of the filter element. The length of the projection in the vertical direction, i.e. the z-axis, depends on the thickness of the filter element and thus on the associated holding device. Typically, the length of the projection is such that the projection may engage between two neighboring panels next to the peripheral end section of the filter element in the holding receptacle of the respective base element as discussed further below or is in flush with the inner upright edge portion of the holding receptacle of the respective base element. Alternatively, each detachable locking clip may contain more than one projection which are designed in the same manner. Generally, the projection is formed integrally with the locking clip, but may also be formed as a separate part and mounted to the respective locking clip.

In some embodiments, the clamping device is configured to retain each of the peripheral end sections of the filter element in the respective holding receptacle. In particular, the clamping device is configured such that the peripheral end section of the filter element which typically includes one single pleat, is clamped and held in the holding receptacle of the base element.

In a further aspect, the overall objective is achieved by a filter element for use in a holding device, in particular a holding device as described in any of the embodiments herein. The filter element includes a predetermined folding edge being configured for folding the filter element. Furthermore, the filter element comprises a plurality of pleats. The pleats extend parallel to each other between the opposite ends of the filter element, i.e. the parallel pleats are arranged one after another between the two opposite ends of the filter element. Each pleat includes a fold line defining a pleat tip and a pair of adjacent panels. The pleat tips may be slightly rounded and the filter element forms either a rigid or a reversible collapsible and expandable zig-zag-pattern. Further, the filter element particularly includes two respective peripheral end sections and each of them includes at least one panel and one pleat tip, but typically one single pleat, wherein the peripheral end sections form the respective end of the filter element.

In some embodiments, the filter element comprises a top surface and a bottom surface. The pleat tips define the planar top surface and the planar bottom surface. The predetermined folding edge extends from the bottom surface towards the top surface. However, the predetermined folding edge does not protrude completely through the filter element from the bottom surface to the top surface.

In some embodiments, the predetermined folding edge is configured such that the filter element can be folded along the predetermined folding edge such that the top surface is divided into two half portions wherein the two half portions contact and/or rest on each other in the folded configuration. It is understood that the term "configured to be folded" or "configured for folding" and the like means that the filter element can be repeatedly folded and unfolded along the predetermined folding edge without destroying the filter element, e.g. without tearing the filter element.

In some embodiments, the filter element comprises more than one of such predetermined folding edges, which preferably extend in parallel to each other. This may allow to fold the filter in more than two parts, such as three or more parts.

The predetermined folding edge is an edge at which the filter element can be folded, respectively at which folding is facilitated as compared to other portions of the filter element lacking such a predetermined folding edge.

The predetermined folding edge may in some embodiments be arranged between two adjacent panels of a pleat.

In some embodiments, the predetermined folding edge may extend in parallel to the pleats. In some embodiments, the predetermined folding edge extends between two oppositely arranged side walls of the filter element. It is understood that the two side walls and the two oppositely arranged ends of the filter element together peripherally delimit the filter element and/or circumferentially surround the plurality of pleats. Thus, in some embodiments, the filter element comprises a frame which peripherally circumferentially delimits the filter element. The filter may comprise, or consist of, the two oppositely arranged side walls and the two oppositely arranged ends of the filter element. At least the two sidewalls are preferably closed walls in particular such that the pleats are not visible in a side view of the filter element viewed along the extension of each pleat and/or along the extension of the predetermined folding edge. The predetermined folding edge may be an opening in the side walls, in particular the only opening in each of the side walls. The side walls may for example each have a rectangular shape extending preferably over the complete thickness of the filter element and over the complete length of the filter element.

The predetermined folding edge includes in some embodiments an incision on each of the two opposite side walls, which may typically result in a triangularly-shaped predetermined folding edge. Alternatively, instead of an incision, parts of the respective side wall of the filter element define a rectangular or round predetermined folding edge.

Typically, the predetermined folding edge is arranged centrally between two adjacent panels in the filter element, in particular such that the filter element can be folded into two parts of equal size, e.g. one above the other. Alternatively, the predetermined folding edge may be arranged at any position of the filter element between two adjacent panels.

Typically, the filter element is made of fiber materials, for example micro glass fibers, polymeric fibers, e.g. natural or synthetic polymer fibers or foam materials, such as polymeric foams. In some embodiments, the fibers of the fiber material **my** be coated, particularly nano-coated.

In some embodiments, the depth of the predetermined folding edge is between 10% and 99%, in particular between 50% and 95%, of the thickness of each of the two oppositely arranged side walls. The thickness of each sidewall is typically defined as the distance between the bottom surface and the top surface.

In a further aspect, the overall objective is achieved by the use of a filter element, such as for example a filter element according to any of the embodiments as described herein or any other suitable filter element, in a holding device as described in any of the embodiments herein. The filter element particularly comprises a predetermined folding edge and a plurality of pleats, the pleats extending parallel to each other between opposite ends of the filter element, wherein each pleat includes a fold line defining a pleat tip and a pair of adjacent panels.

In a further aspect, the overall objective is achieved by a filter arrangement. The filter arrangement includes a holding device as described in any of the embodiments herein and a filter element, in particular a filter element as described in and of the embodiment herein. The filter element may include a predetermined folding edge and includes a plurality of pleats. The pleats extend parallel to each other between opposite ends of the filter element and each pleat includes a fold line defining a pleat tip and a pair of adjacent panels. The pleat tips may be slightly rounded and the filter element forms either a rigid or a reversible collapsible and expandable zig-zag-pattern. The filter element includes two respective peripheral end sections and each of them includes at least one panel and one pleat tip, but typically one single pleat, wherein the peripheral end sections form the respective end of the filter element. The filter element is held by the holding device.

In some embodiments, the clamping device retains each of the peripheral end sections of the filter element in the respective holding receptacle. The clamping device securely retains the peripheral end section of the filter element in the holding receptacle and thus the filter element in the receiving aperture of the filter frame and prevents air from flowing unfiltered around the filter element and/or ballooning the filter element out of the filter frame.

In some embodiments, each of the respective peripheral end sections of the filter element typically includes one filter pleat which are each pinched by the respective detachable locking clip and its projection into the respective holding receptacle and thus to the inner upright edge portion of the respective base element, respectively. Alternatively, each of the respective peripheral end sections of the filter element may include at least a panel which are pinched into the respective holding receptacle by the clamping device and its projection.

In a further aspect, the overall objective is achieved by the use of a holding device or a filter arrangement as disclosed in any of the embodiments herein in a HVAC-System in accordance with the present disclosure, in particular for filtering air.

In a further aspect, the overall objective is achieved by a kit of parts comprising a filter arrangement according to any of the embodiments as described herein and one or more filter elements, in particular one or more filter elements as described above and further below. The kit comprises one or more filter elements to allow replacement of the filter element after a period of use.

### BRIEF DESCRIPTION OF THE DRAWINGS

- Fig. 1a: shows a schematic top view of the first side of a holding device according to an embodiment of the invention;
- Fig. 1b, c: shows a schematic side view on base elements of a holding device according to an embodiment of the invention;
- Fig. 1d: shows a schematic side view on a connection element of a holding device according to an embodiment of the invention;
- Fig.2: shows an exploded top view of the first side of a holding device according to an embodiment of the invention;
- Fig. 3a, b: shows a schematic top view of the first and second side of a filter arrangement according to an embodiment of the invention;
- Fig. 4: shows an exploded perspective view of a filter arrangement according to an embodiment of the invention;
- Fig. 5: shows a schematic cross sectional view of a filter arrangement according to an embodiment of the invention;
- Fig.6: shows a schematic cross sectional view of a holding device according to an embodiment of the invention.
- Fig. 7: shows a schematic view on a filter element according to an embodiment of the invention.

### DESCRIPTION OF THE EMBODIMENTS

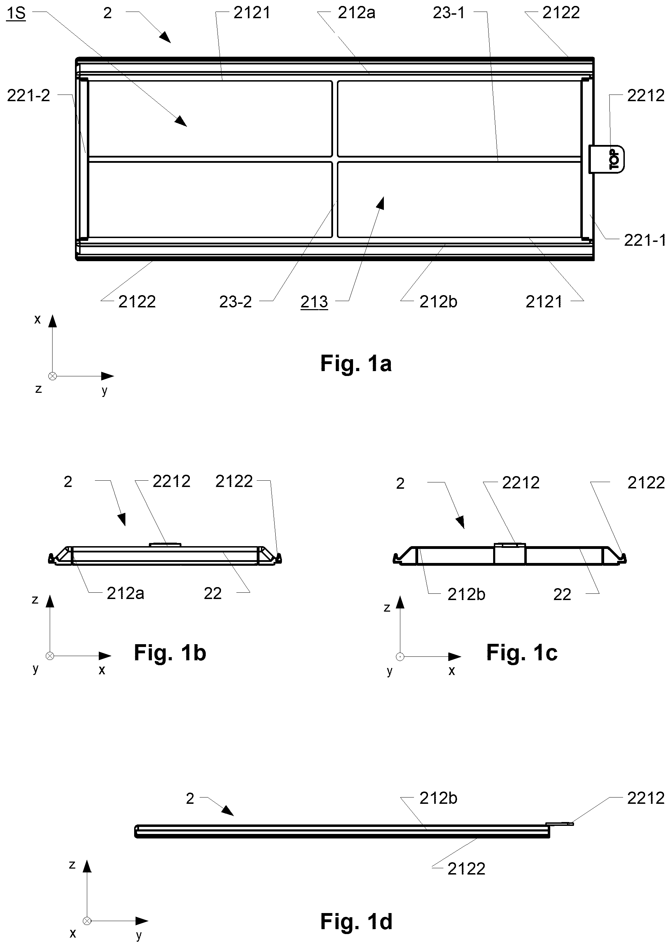

Figure 1a shows an embodiment of a holding device 2 containing a filter frame 21 and a clamping device 22 (see Fig. 1b), in a schematic top view on first side 1S of the filter frame 21. In this embodiment, the base elements and the connection elements 212a, 212b are rectangular interconnected to a filter frame 21 and circumferentially delimit a receiving aperture 213 to receive a filter element. In this embodiment, the base element which represents the upper end of the holding device 2 contains an additional tag 2212 for securing correct mounting of the filter arrangement into an HVAC system. The edge portions of each connection element 212a, 212b which provide a sealing surface for the side edges of the filter element shown in this embodiment have a straight and rectangular configuration.

Furthermore, each of the connection elements 212a, 212b comprises a filter support structure 2121 which is a planar bearing surface and projects proximal from the respective connection element 212a, 212b into, respectively towards, receiving aperture 213. Each of filter support structures 2121 is arranged flush with the back side of the respective connection element 212a, 212b at the second side of the filter frame 21. Each of the filter support structure 2121 shown in this embodiment is formed in one piece and extends along the entire height of the receiving aperture 213 between the base elements.

The embodiment shown in Figure 1a shows a holding device 2 which contains two filter support ribs 23-1 and 23-2. One of the filter support ribs 23-1 is connected with and extends longitudinally along the y-axis, i.e. along the longitudinal direction of the holding device, between the two base elements and the other filter support rip 23-2 is connected with and extends transversally along the x-axis, i.e. along the traverse direction of the holding device, between the two connection elements 212a, 212b respectively the two filter support structures 2121. The longitudinal (see 23-1) and the transversal (see 23-2) filter support rib are arranged in flush with the filter support structure 2121 of the connection elements 212a, 212b and with the back side of the base elements, respectively. The longitudinal and the transversal filter support rib are arranged centrally and perpendicular to the respective filter support structure 2121 of the connection element 212a, 212b and to the respective base element respectively and divide the receiving aperture 213 into four rectangular and equally sized sections.

In the shown example in Figure 1a, each of the connection elements 212a, 212b includes in an outwards direction a mounting structure 2122 in the shape of a guide rail. The guide rail 2122 is configured to engage with a corresponding counter mounting structure of a HVAC system and extends in one piece outside along the entire height of the connection element.

In the embodiment shown in Figure 1a, the base elements, connection elements 212a, 212b, filter support structures 2121, guide rails 2122 as well as the filter support ribs 23-1, 23-2 are formed integrally and made from an injection molded polymer.

The clamping device 22 (see Fig. 1b) shown in Figure 1a comprises two separate detachable locking clips 221-1, 221-2 associated with each of the base elements. In this embodiment, in its mounted and closed state, each of the detachable locking clips 221-1, 221-2 is attached to the respective base element and snap-fits over and extends over the entire width of the respective base element, which defines the receiving aperture 213. In this shown embodiment, one of the two detachable locking clips 221-1 contains a recess to engage around the additional tag 2212 of the base element.

Each of Figure 1b, Figure 1c and Figure 1d shows a schematic side view of the holding device 2 shown in Figure 1a. Figure 1b shows the base element including a clamping device 22 of the holding device 2 along the positive y-axis, i.e. along the longitudinal direction of the holding device, from its bottom to the top in a correct mounted direction. Figure 1c shows the base element including a clamping device 22 along the negative y-axis from the top of the holding device 2 in the mounting direction. The base element shown in this embodiment contains an additional tag defining the upper end of the holding device 2. Figure 1d shows one of the connection elements 212b and its mounting structure 2122 along the positive y-axis.

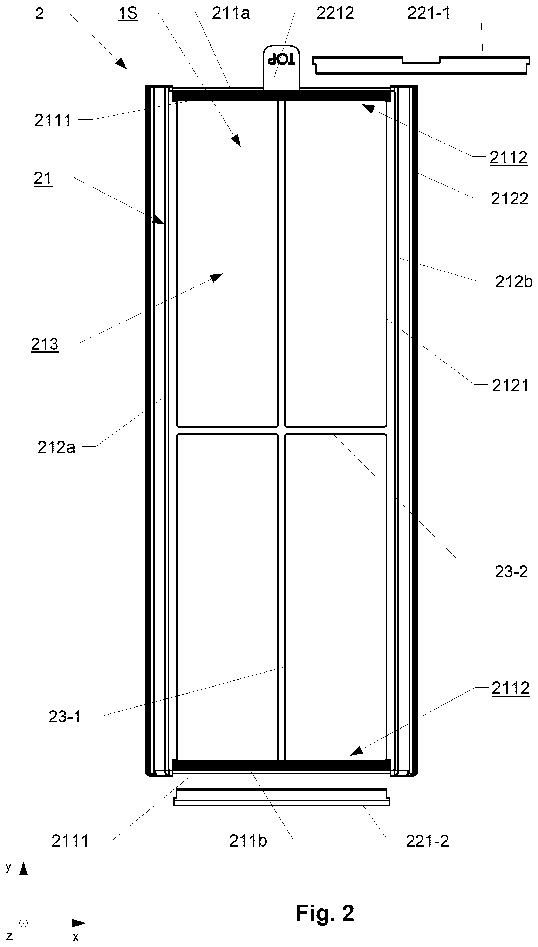

Figure 2 shows the holding device 2 shown in Figure 1a in an exploded top view. Each of the base elements 211a, 211b in this embodiment contains an elongated holding receptacle 2111 in the form of a groove. The grooves 2111 extend parallel along the x-axis, i.e. along the traverse direction of the holding device, over the entire width of the receiving aperture 213 and opens into the front surface 2112 of the respective base element 211a, 211b. The base element 211a at the upper end of the holding device 2 contains an additional tag 2212 and the associated detachable locking clip 221-1 contains the recess to engage around the additional tag 2212.

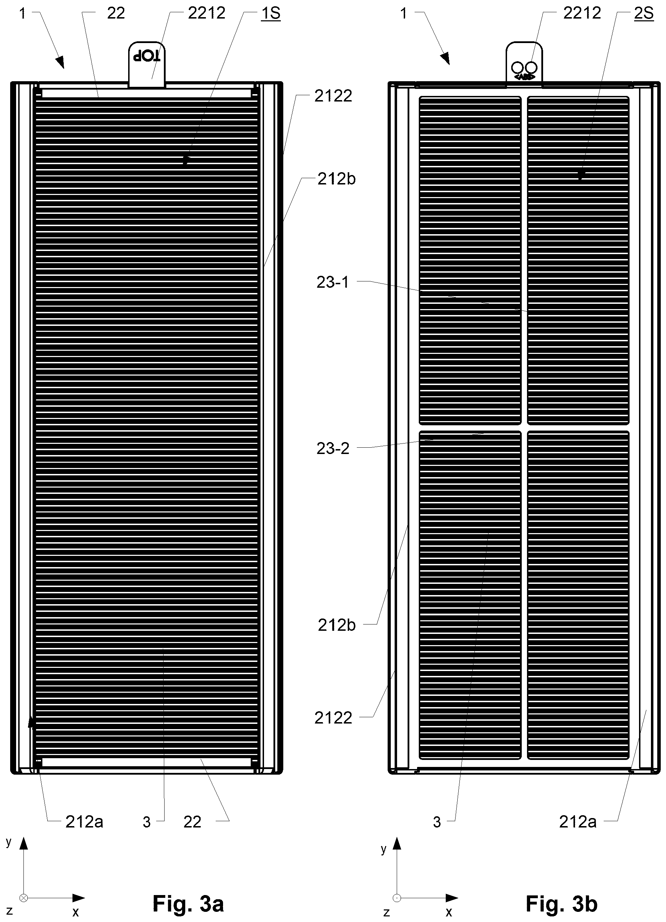

Figure 3a and Figure 3b each shows an embodiment of a filter arrangement 1 containing a holding device and a filter element 3 in a top view of the first side S1. The peripheral end sections of the filter element 3 are installed in the respective holding receptacle of the base elements, the clamping device 22 snap-fits over the receiving aperture which defines the width of the respective base element and therefore the filter element 3 fits and extends over the entire receiving aperture. Figure 3a shows the front view of the first side S1 and Figure 3b shows the back view of the second side S2 of the filter arrangement 1, respectively. In this embodiment shown in Figure 3b, the filter support structure 2121 as well as the longitudinal 23-1 and transversal 23-2 filter support ribs are mounted flush with the second side S2 of the connection element 212a, 212b or base element respectively.

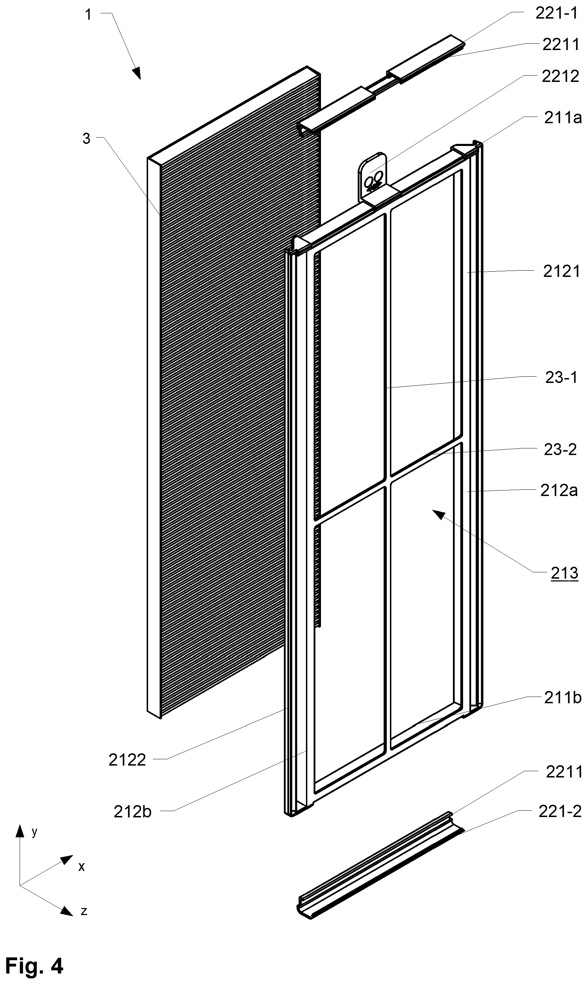

Figure 4 shows the filter arrangement 1 shown in Figure 3a and Figure 3b in an exploded perspective view.

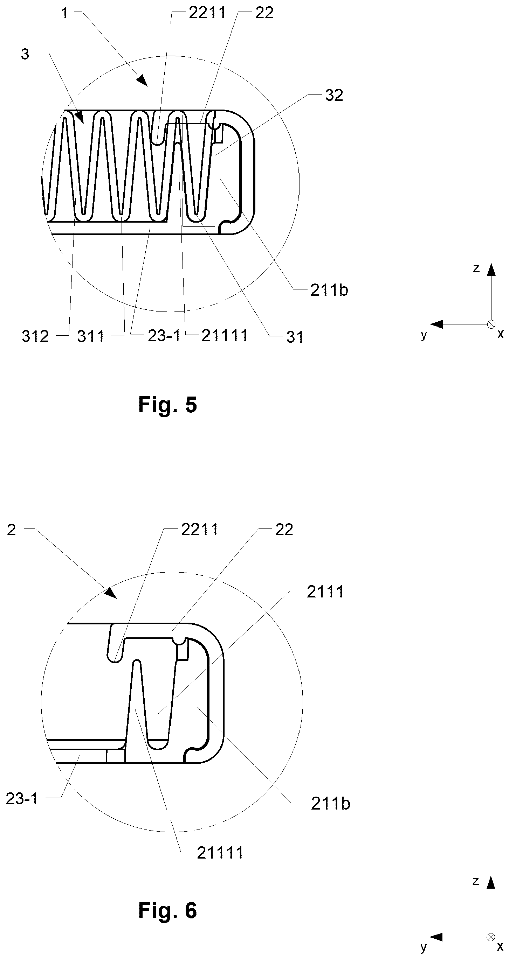

Figure 5 shows the embodiment of a filter arrangement 1 of Figure 3a, 3b and Figure 4 in a schematic cross sectional view. The holding receptacle contains the peripheral end section 32 of the filter element 3 which comprises, respectively consists of, one pleat 31. The projection 2211 of the clamping device 22 engages between two neighboring panels, presses the peripheral end section 32 into the holding receptacle 21 1 1 and thus to the inner upright edge portion 21111 of the base element 211b and retains the filter element 3 in the receiving aperture of the filter frame.

Figure 6 shows an embodiment of a holding device 2 shown in Figure 1a and Figure 2 in a schematic cross sectional view. In this embodiment, the holding receptacle 2111 has the form of a groove and can contain a peripheral end section of a filter element with one single pleat. The projection 2211 of the clamping device 22 extends along the longitudinal direction of the holding device, i.e. the y-direction, beyond the groove 2111 and its inner upright edge portion 21111 respectively. Further, the projection 2211 of the clamping device 22 is along the vertical direction, i.e. the z-axis, in flush with the inner upright edge portion 21111 of the base element 211b and thus holds in a mounted state the peripheral end section of a filter element in the groove 2111. It can further be seen that clamping device 22 encompasses base element 211 in the z-direction, from both sides.

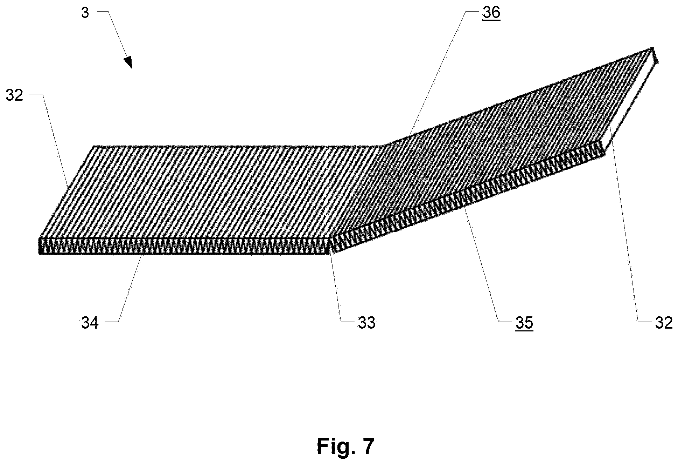

Figure 7 shows an embodiment of a filter element 3 containing a predetermined folding edge 33. The pleats are however not shown for clarity purposes. In this embodiment, the predetermined folding edge 33 is arranged centrally at the filter element 3 and includes an incision in the respective side wall 34 of the filter element 3 which results in a triangularly-shaped predetermined folding edge 33. The predetermined folding edge 33 extends between the two oppositely arranged side walls 34, which together with the two oppositely arranged ends, which each contain a peripheral end section 32, peripherally delimit the filter element 3 and form a frame. The predetermined folding edge 33 extends from the bottom surface 35 towards the top surface 36, however it does not protrude the filter element 3 from the bottom surface 35 to the top surface 36. The predetermined folding edge represents in the embodiment shown the only incision in the otherwise continuous side walls 34. The filter element 3 is not in the unfolded state, but currently being folded. After folding the two corresponding half portions of top surface 36 rest on each other.

### REFERENCE SIGNS

- 1: filter arrangement
- 2: holding device
- 21: filter frame
- 211a, 211b: base element
- 2111: holding receptacle / groove
- 21111: inner upright edge portion
- 2112: front surface
- 212a, 212b: connection element
- 2121: filter support structure
- 2122: mounting structure / guide rail
- 213: receiving aperture
- 22: clamping device
- 221: detachable locking clip
- 221-1: top detachable locking clip
- 221-2: bottom detachable locking clip
- 2211: projection
- 2212: tag
- 23-1: longitudinal filter support rib
- 23-2: transversal filter support rib
- 3: filter element
- 31: pleats
- 311: pleat tip
- 312: panels
- 32: peripheral end section
- 33: predetermined folding edge
- 34: side wall
- 35: bottom surface
- 36: top surface
- 1S: first side
- 2S: second side
- X: first direction

## Claims

1. Holding device (2) for holding a filter element (3), wherein the filter element (3) includes a plurality of pleats (31), the pleats (31) extending parallel to each other between opposite ends of the filter element (3), wherein each pleat (31) includes a fold line defining a pleat tip (311) and a pair of adjacent panels (312); wherein the holding device (2) includes:
a) a filter frame (21), wherein the filter frame (21) has a first (1S) and a second (2S) side, the filter frame (21) including two elongated base elements (211a, 211b) and two elongated connection elements (212a, 212b), the connection elements (212a, 212b) extending between and interconnecting the base elements (211a, 211b), the base elements (211a, 211b) and the connection elements (212a, 212b) circumferentially delimiting, in combination, a receiving aperture (213), the receiving aperture (213) being through-going between the first side (1S) and the second side (2S),
wherein the base elements (211a, 211b) extend parallel to each other along a first direction (X),
wherein the base elements (211) each comprise an elongated holding receptacle (2111), the holding receptacle (2111) extending parallel along the first direction (X) and opening into a front surface (2112) of the respective base element (211a, 211b) i.e. at the first side (1S), wherein the holding receptacles (2111) are each configured to receive a respective peripheral end section (32) of the filter element (3), wherein the elongated holding receptacles (2111) are defined by an outer edge portion and an inner upright edge portion (21111) of the respective base element (211),
b) a clamping device (22), which comprises two separate detachable locking clips (221-1, 221-2) associated with each of the base elements,
**wherein** the clamping device (22) is completely releasably attached to the filter frame (21), thereby removably clamping the filter element (3) to the filter frame (21), wherein in the connected state, the clamping device and the filter frame contact each other and in the disconnected state, the clamping device and the filter frame are completely separated from each other,
wherein the detachable locking clips (221-1, 221-2) each comprise a projection (2211) to engage with the filter element (3) between two neighboring panels (312) at the peripheral end section (32) of the filter element (3),
wherein the projection (2211) extends along the longitudinal direction of the holding device (2) beyond the holding receptacle (2111) and its inner upright edge portion (21111) and thus holds in a mounted state the peripheral end section of a filter element (3) in the holding receptacle (2111).

2. Holding device (2) according to claim 1, wherein the base elements (211a, 211b) and the connection elements (21 2a, 212b) are rectangularly interconnected.

3. Holding device (2) according to any one of the preceding claims, wherein the connection elements (212a, 212b) each comprise a filter support structure (2121), the filter support structure (2121) projecting proximally from the respective connection element (212a, 212b) towards the receiving aperture (213).

4. Holding device (2) according to any one of the preceding claims, wherein the filter support structure (2121) is in each case arranged along a complete or substantially complete extension of the receiving aperture between the base elements (211a, 211b).

5. Holding device (2) according to any one of the preceding claims, wherein the holding device (2) includes at least one filter support rib (23-1, 23-2).

6. Holding device (2) according to any one of the preceding claims, wherein each of the connection elements (212a, 212b) includes a mounting structure (2122), the mounting structure (2122) projecting form the respective connection element (212a, 212b) in an outwards direction, the mounting structure (2122) being configured to engage with a counter mounting structure of a Heating-Ventilation and Air-Conditioning (HVAC) system.

7. Holding device (2) according to any one of the preceding claims, wherein the clamping device (22) is configured to retain each of the peripheral end section (32) of the filter element (3) in the respective holding receptacle (2111).

8. Use of a filter element (3) in a holding device (2) according to any of claims 1 to 7.

9. Filter arrangement (1), the filter arrangement (1) including a holding device (2) according to any one of claims 1 to 7 and a filter element (3), wherein the filter element (3) includes a plurality of pleats (31), the pleats (31) extending parallel to each other between opposite ends of the filter element (3), wherein each pleat (31) includes a fold line defining a pleat tip (311) and a pair of adjacent panels (312), wherein the filter element (3) is held by the holding device (2).

10. Filter arrangement (1) according to claim 9, wherein the clamping device (22) retains each of the peripheral end section (32) of the filter element (3) in the respective holding receptacle (2111).

11. Use of a holding device (2) according to claim 1 to 7 or a filter arrangement (1) according to either of claims 9 or 10 in a Heating-Ventilation and Air-Conditioning (HVAC) system.

12. Kit of parts comprising a filter arrangement (1) according to claim 9 or 10, and one or more filter elements (3).

## Patentansprüche

1. Haltevorrichtung (2) für ein Filterelement (3), wobei das Filterelement (3) eine Vielzahl von Falten (31) umfasst, wobei die Falten (31) parallel zueinander zwischen gegenüberliegenden Enden des Filterelements (3) verlaufen, wobei jede Falte (31) eine Faltlinie aufweist, die eine Faltenspitze (311) und ein Paar benachbarter Bahnen (312) definiert; wobei die Haltevorrichtung (2) einschliesst:
a) einen Filterrahmen (21), wobei der Filterrahmen (21) eine erste (1S) und eine zweite (2S) Seite aufweist, wobei der Filterrahmen (21) zwei längliche Basiselemente (211a, 211b) und zwei längliche Verbindungselemente (212a, 212b) einschliesst, wobei die Verbindungselemente (212a, 212b) zwischen den Basiselementen (211a, 211b) verlaufen und diese verbinden, wobei die Basiselemente (211a, 211b) und die Verbindungselemente (212a, 212b) zusammen in Umfangsrichtung eine Aufnahmeöffnung (213) begrenzen, wobei die Aufnahmeöffnung (213) zwischen der ersten Seite (1S) und der zweiten Seite (2S) durchgehend ist,
wobei die Basiselemente (211a, 211b) parallel zueinander entlang einer ersten Richtung (X) verlaufen,
wobei die Basiselemente (211) jeweils eine längliche Halteaufnahme (2111) umfassen, wobei die Halteaufnahme (2111) parallel zur ersten Richtung (X) verläuft und in eine vordere Oberfläche (2112) des jeweiligen Basiselements (211a, 211b) führt d. h. an der ersten Seite (1S), wobei die Halteaufnahmen (2111) jeweils so konfiguriert sind, dass sie einen jeweiligen peripheren Endabschnitt (32) des Filterelements (3) empfangen, wobei die länglichen Halteaufnahmen (2111) durch einen äusseren Randteil und einen inneren aufrechten Randteil (21111) des jeweiligen Basiselements (211) begrenzt werden,
b) einer Klemmvorrichtung (22), die zwei separate abnehmbare Verriegelungsklammern (221-1, 221-2) umfasst, die jedem der Basiselemente zugeordnet sind,
wobei die Klemmvorrichtung (22) vollständig lösbar am Filterrahmen (21) befestigt ist, wodurch das Filterelement (3) lösbar am Filterrahmen (21) festgeklemmt wird, wobei im verbundenen Zustand die Klemmvorrichtung und der Filterrahmen miteinander in Kontakt stehen und im getrennten Zustand die Klemmvorrichtung und der Filterrahmen vollständig voneinander getrennt sind,
wobei die abnehmbaren Verriegelungsklammern (221-1, 221-2) jeweils einen Vorsprung (2211) umfassen, um mit dem Filterelement (3) zwischen zwei benachbarten Bahnen (312) am peripheren Endabschnitt (32) des Filterelements (3) in Verbindung zu stehen,
wobei der Vorsprung (2211) entlang der Längsrichtung der Haltevorrichtung (2) über die Halteaufnahme (2111) und deren inneren, aufrechten Endteil (21111) verläuft und somit den Randendteil eines Filterelements (3) in der Halteaufnahme (2111) im montierten Zustand hält.

2. Haltevorrichtung (2) gemäß Anspruch 1, wobei die Basiselemente (211a, 211b) und die Verbindungselemente (212a, 212b) rechtwinklig miteinander verbunden sind.

3. Haltevorrichtung (2) gemäß einem der vorstehenden Ansprüche, wobei die Verbindungselemente (212a, 212b) jeweils eine Filterträgerstruktur (2121) umfassen, wobei die Filterträgerstruktur (2121) proximal von dem jeweiligen Verbindungselement (212a, 212b) in Richtung der Aufnahmeöffnung (213) vorsteht.

4. Haltevorrichtung (2) gemäß einem der vorstehenden Ansprüche, wobei die Filterträgerstruktur (2121) jeweils entlang einer vollständigen oder im Wesentlichen vollständigen Erstreckung der Aufnahmeöffnung zwischen den Basiselementen (211 a, 211b) angeordnet ist.

5. Haltevorrichtung (2) gemäß einem der vorstehenden Ansprüche, wobei die Haltevorrichtung (2) mindestens eine Filterträgerrippe (23-1, 23-2) einschliesst.

6. Haltevorrichtung (2) gemäß einem der vorstehenden Ansprüche, wobei jedes der Verbindungselemente (212a, 212b) eine Befestigungsstruktur (2122) umfasst, wobei die Befestigungsstruktur (2122) von dem jeweiligen Verbindungselement (212a, 212b) in einer nach außen gerichteten Richtung vorsteht, wobei die Befestigungsstruktur (2122) konfiguriert ist, um mit einer Gegenbefestigungsstruktur einer Heizungs-, Lüftungs- und Klimaanlage (HVAC) in Verbindung zu stehen.

7. Haltevorrichtung (2) gemäß einem der vorstehenden Ansprüche, wobei die Klemmvorrichtung (22) konfiguriert ist, jeden der peripheren Endabschnitte (32) des Filterelements (3) in der jeweiligen Halteaufnahme (2111) zu halten.

8. Verwendung eines Filterelements (3) in einer Haltevorrichtung (2) gemäß einem der Ansprüche 1 bis 7.

9. Filteranordnung (1), wobei die Filteranordnung (1) eine Haltevorrichtung (2) gemäß einem der Ansprüche 1 bis 7 und ein Filterelement (3) einschliesst, wobei das Filterelement (3) eine Vielzahl von Falten (31) einschliesst, wobei sich die Falten (31) parallel zueinander zwischen gegenüberliegenden Enden des Filterelements (3) verlaufen, wobei jede Falte (31) eine Faltlinie aufweist, die eine Faltenspitze (311) und ein Paar benachbarter Bahnen (312) umfasst, wobei das Filterelement (3) von der Haltevorrichtung (2) gehalten wird.

10. Filteranordnung (1) gemäß Anspruch 9, wobei die Klemmvorrichtung (22) jeden der peripheren Endabschnitte (32) des Filterelements (3) in der jeweiligen Halteaufnahme (2111) hält.

11. Verwendung einer Haltevorrichtung (2) gemäß Anspruch 1 bis 7 oder einer Filteranordnung (1) gemäß Anspruch 9 oder 10 in einer Heizungs-, Lüftungs- und Klimaanlage (HVAC).

12. Bausatz, umfassend eine Filteranordnung (1) gemäß Anspruch 9 oder 10 und ein oder mehrere Filterelemente (3).

## Revendications

1. Dispositif de retenue (2) destiné à maintenir un élément filtrant (3), dans lequel l'élément filtrant (3) comprend une pluralité de plis (31), les plis (31) s'étendant parallèlement les uns aux autres entre les extrémités opposées de l'élément filtrant (3), dans lequel chaque pli (31) comprend une ligne de pliage définissant une pointe de pli (311) et une paire de panneaux adjacents (312) ; dans lequel le dispositif de retenue (2) comprend :
a) un cadre de filtre (21), dans lequel le cadre de filtre (21) présente un premier (1S) et un deuxième (2S) côtés, le cadre de filtre (21) comprenant deux éléments de base allongés (211a, 211b) et deux éléments de liaison allongés (212a, 212b), les éléments de liaison (212a, 212b) s'étendant entre les éléments de base (211a, 211b) et étant reliés entre eux, les éléments de base (211a, 211b) et les éléments de liaison (212a, 212b) délimitant ensemble, sur leur périphérie, une ouverture de réception (213), l'ouverture de réception (213) étant traversante entre le premier côté (1S) et le deuxième côté (2S),
dans lequel les éléments de base (211a, 211b) s'étendent parallèlement l'un à l'autre selon une première direction (X),
dans lequel les éléments de base (211) comprennent chacun un logement de retenue allongé (2111), ledit logement de retenue (2111) s'étendant parallèlement à la première direction (X) et s'ouvrant dans une surface avant (2112) de l'élément de base respectif (211a, 211b) c'est-à-dire au niveau du premier côté (1S), les logements de retenue (2111) étant chacun configurés pour recevoir une section d'extrémité périphérique respective (32) de l'élément filtrant (3), les logements de retenue allongés (2111) étant définis par une partie de bord extérieur et une partie de bord intérieur vertical (21111) de l'élément de base respectif (211),
b) un dispositif de serrage (22), qui comprend deux clips de verrouillage amovibles (221-1, 221-2) séparés associés à chacun des éléments de base,
dans lequel le dispositif de serrage (22) est fixé de manière entièrement amovible au cadre de filtre (21), serrant ainsi de manière amovible l'élément filtrant (3) sur le cadre de filtre (21), dans lequel, à l'état connecté, le dispositif de serrage et le cadre de filtre sont en contact l'un avec l'autre et, à l'état déconnecté, le dispositif de serrage et le cadre de filtre sont complètement séparés l'un de l'autre,
dans lequel les clips de verrouillage amovibles (221-1, 221-2) comprennent chacun une saillie (2211) destinée à s'engager avec l'élément filtrant (3) entre deux panneaux adjacents (312) au niveau de la section d'extrémité périphérique (32) de l'élément filtrant (3),
dans lequel la saillie (2211) s'étend dans la direction longitudinale du dispositif de retenue (2) au-delà du logement de retenue (2111) et de sa partie de bord intérieur vertical (21111) et maintient ainsi, à l'état monté, la section d'extrémité périphérique d'un élément filtrant (3) dans le logement de retenue (2111).

2. Dispositif de retenue (2) selon la revendication 1, dans lequel les éléments de base (211a, 211b) et les éléments de liaison (212a, 212b) sont reliés entre eux de manière rectangulaire.

3. Dispositif de retenue (2) selon l'une quelconque des revendications précédentes, dans lequel les éléments de liaison (212a, 212b) comprennent chacun une structure de support de filtre (2121), la structure de support de filtre (2121) faisant saillie de manière proximale à partir de l'élément de liaison respectif (212a, 212b) vers l'ouverture de réception (213).

4. Dispositif de retenue (2) selon l'une quelconque des revendications précédentes, dans lequel la structure de support de filtre (2121) est arrangée dans chaque cas le long d'une extension complète ou sensiblement complète de l'ouverture de réception entre les éléments de base (211a, 211b).

5. Dispositif de retenue (2) selon l'une quelconque des revendications précédentes, dans lequel le dispositif de retenue (2) comprend au moins une nervure de support de filtre (23-1, 23-2).

6. Dispositif de retenue (2) selon l'une quelconque des revendications précédentes, dans lequel chacun des éléments de liaison (212a, 212b) comprend une structure de montage (2122), la structure de montage (2122) faisant saillie à partir de l'élément de liaison respectif (212a, 212b) vers l'extérieur, la structure de montage (2122) étant configurée pour s'engager avec une structure de montage complémentaire d'un système de chauffage, de ventilation et de climatisation (CVC).

7. Dispositif de retenue (2) selon l'une quelconque des revendications précédentes, dans lequel le dispositif de serrage (22) est configuré pour retenir chacune des sections d'extrémité périphériques (32) de l'élément filtrant (3) dans le logement de retenue respectif (2111).

8. Utilisation d'un élément filtrant (3) dans un dispositif de retenue (2) selon l'une quelconque des revendications 1 à 7.

9. Ensemble de filtration (1), l'ensemble de filtration (1) comprenant un dispositif de retenue (2) selon l'une quelconque des revendications 1 à 7 et un élément filtrant (3), dans lequel l'élément filtrant (3) comprend une pluralité de plis (31), les plis (31) s'étendant parallèlement les uns aux autres entre les extrémités opposées de l'élément filtrant (3), dans lequel chaque pli (31) comprend une ligne de pliage définissant une pointe de pli (311) et une paire de panneaux adjacents (312), dans lequel l'élément filtrant (3) est maintenu par le dispositif de retenue (2).

10. Ensemble de filtration (1) selon la revendication 9, dans lequel le dispositif de serrage (22) retient chacune des sections d'extrémité périphériques (32) de l'élément filtrant (3) dans le logement de retenue (2111) correspondant.

11. Utilisation d'un dispositif de retenue (2) selon l'une des revendications 1 à 7 ou d'un ensemble de filtration (1) selon l'une des revendications 9 ou 10 dans un système de chauffage, de ventilation et de climatisation (CVC).

12. Kit de pièces comprenant un ensemble de filtration (1) selon la revendication 9 ou 10, et un ou plusieurs éléments filtrants (3).
